(19) Europäisches Patentamt European Patent Office Office européen des brevets

(11) **EP 2 305 498 A2**

(12) **EUROPEAN PATENT APPLICATION**

(43) Date of publication:
**06.04.2011 Bulletin 2011/14**

(51) Int Cl.:
***B60H 3/02*** *(2006.01)*

(21) Application number: **10185495.8**

(22) Date of filing: **01.10.2010**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br><br>(30) Priority: **02.10.2009 JP 2009230081**<br><br>(71) Applicant: **Kabushiki Kaisha Toyota Jidoshokki Kariya-shi,**<br>**Aichi 448-8671 (JP)** | (72) Inventors:<br>• **Naoto, Morisaku**<br>  **Kariya-shi Aichi 448-8671 (JP)**<br>• **Hirokuni, Akiyama**<br>  **Kariya-shi Aichi 448-8671 (JP)**<br><br>(74) Representative: **TBK-Patent**<br>**Bavariaring 4-6**<br>**80336 München (DE)** |

(54) **Air conditioner and method for controlling of air conditioner**

(57)  An air conditioner includes first and second air passages, first and desiccant devices, a system heat source, a heat supplier, a system heat source temperature sensor, an airflow controller and a controller. The first and second air passages are communicable with a space to be air conditioned. The first desiccant device disposing in the first air passage has a first desiccant material. The second desiccant device disposed in the second air passage has a second desiccant material whose temperature for regeneration is higher than the temperature for regeneration of the first desiccant material. The heat supplier supplies heat generated by the system heat source to the first desiccant device for regenerating the first desiccant material. The airflow controller regulates airflow in the first and second passages. The controller controls the airflow controller based on the temperature of the system heat source detected by the system heat source temperature sensor.

## FIG. 1

EP 2 305 498 A2

## Description

BACKGROUND OF THE INVENTION

The present invention relates to an air conditioner for a vehicle and a method for controlling of the air conditioner.

A conventional air conditioner for a vehicle is disclosed in Japanese Patent Application Publication No. 2004-177074. Referring to Fig. 12, the air conditioner has a first air passage 107, a second air passage 108, a first desiccant rotor 101, a second desiccant rotor 102 and a sensible heat exchanger 103. The first air passage 107 includes a suction passage 105 and a discharge passage 106. The first desiccant rotor 101 has a first dehumidifier 121 in the suction passage 105 thereof and a dehumidifier-cooler 122 in the discharge passage 106 thereof. The second desiccant rotor 102 includes a second dehumidifier 123 in the suction passage 105 thereof and a regenerating part 124 in the second air passage 108 thereof. Air flowing from the vehicle interior is dehumidified in the first dehumidifier 121 and the second dehumidifier 123, cooled in the sensible heat exchanger 103, humidified and cooled in the dehumidifier-cooler 122 and then supplied to the vehicle interior.

Air flowed into the air passage 107 is dehumidified in the first dehydrator 121 of the first desiccant rotor 101 and then further dehumidified in the second dehydrator 123 of the second desiccant rotor 102. Thus, the air to be dehumidified by the first desiccant rotor 101 has a relatively high humidity, while the air to be dehumidified by the second desiccant rotor 102 has been already dehumidified by the first dehumidifier 121 and, therefore, has a relatively low humidity. Therefore, appropriate materials suitable for the respective humidity ranges of the air can be used in the desiccant rotors 101, 102 for effective utilization of the desiccant rotors 101, 102. The ranges of temperature under which the first desiccant rotor 101 and the second desiccant rotor 102 are operated are different from each other. Thus, the first and second desiccant rotors 101, 102 are used under temperatures of different ranges, so that the heat loss due to a change of temperatures of the desiccant rotors 101, 102 is reduced.

In the desiccant rotor used in the above conventional air conditioner, heat loss of the desiccant rotor due to the change of the temperature of the desiccant rotor can be reduced. However, in a vehicle which is powered only by a battery during at least a certain period of time, such as an electric vehicle or a plug-in hybrid vehicle (these vehicles hereinafter being referred to merely as " PHEV"), the temperature of exhaust heat generated by system heat sources such as an inverter is lower than the temperature of exhaust gas heat generated by the vehicle engine. Therefore, air having a high temperature for regenerating the desiccant rotor is not generated, so that the desiccant rotor cannot be regenerated for repeated dehumidification.

The present invention is directed to providing an air conditioner by which air can be repeatedly dehumidified when the temperature of exhaust heat is low and a method for controlling the air conditioner.

SUMMARY OF THE INVENTION

In accordance with the present invention, an air conditioner includes first and second air passages, first and second desiccant devices, a system heat source, a heat supplier, a system heat source temperature sensor, an airflow controller and a controller. The first air passage has a first inlet and a first outlet communicable with a space to be air conditioned. The first desiccant device has a first desiccant material and is disposed in the first air passage. The second air passage has a second inlet and a second outlet communicable with the space. The second desiccant device has a second desiccant material whose temperature for regeneration is higher than the temperature for regeneration of the first desiccant material and is disposed in the second air passage. The heat supplier supplies heat generated by the system heat source to the first desiccant device for regenerating the first desiccant material. The system heat source temperature sensor detects the temperature of the system heat source. The airflow controller regulates airflow in the first air passage and the second air passage. The controller controls the airflow controller based on the temperature of the system heat source detected by the system heat source temperature sensor.

Other aspects and advantages of the invention will become apparent from the following description, taken in conjunction with the accompanying drawings, illustrating by way of example the principles of the invention.

BRIEF DESCRIPTION OF THE DRAWINGS

The invention together with objects and advantages thereof, may best be understood by reference to the following description of the presently preferred embodiments together with the accompanying drawings in which:

Fig. 1 is a plane view showing the structure of an electric vehicle having an air conditioner according to a first preferred embodiment of the present invention;

Fig. 2 is a system diagram of the air conditioner of Fig. 1;

Fig. 3 is a flowchart showing steps of operation for controlling the dehumidification in accordance with the condition of the dehumidifying load and exhaust heat in the air conditioner of Fig. 1;

Fig. 4 is a temperature data map showing a relation between the temperatures of external air and the exhaust heat in the air conditioner of Fig. 1.

Fig. 5A is a system diagram of the air conditioner of Fig. 1 explaining dehumidification performed only by a first desiccant device of the air conditioner;

Fig. 5B is a system diagram of the air conditioner of Fig. 1 explaining dehumidification performed by the combination of the first and second desiccant devices;

Fig. 5C is a system diagram of the air conditioner of Fig. 1 explaining dehumidification performed only by the second desiccant device of the air conditioner;

Fig. 5D is a system diagram of the air conditioner of Fig. 1 explaining regeneration of the second desiccant device of the air conditioner;

Fig. 6A is a system diagram of the air conditioner of Fig. 1 explaining regeneration of the first desiccant device of the air conditioner when dehumidification is performed by the second desiccant device;

Fig. 6B is a system diagram of the air conditioner of Fig. 1 explaining regeneration of the first desiccant device when dehumidification is not performed;

Fig. 7A is a system diagram of an air conditioner according to a second preferred embodiment of the present invention;

Fig. 7B is the fragmentary diagram of the air conditioner of Fig. 7A in which three-way valves are used instead of a valve;

Fig. 8A is a system diagram of an alternative air conditioner according to the second preferred embodiment of the present invention;

Fig. 8B is an fragmentary diagram of the air conditioner of Fig. 8A in which three-way valves are used instead of a valve;

Fig. 9 is a system diagram of an air conditioner according to a third preferred embodiment of the present invention;

Fig. 10 is a system diagram of the air conditioner of Fig. 9 explaining heating of the vehicle interior by using air generated by regeneration of the second moisture absorber;

Fig. 11 is a system diagram of the air conditioner of Fig. 9 explaining heating of the vehicle interior by using air generated by regeneration of the first moisture absorber; and

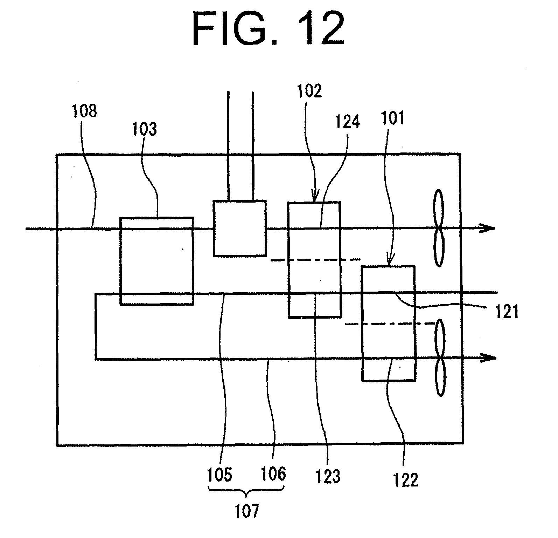

Fig. 12 is a system diagram of an air conditioner according to a background art.

DETAILED DESCRIPTION OF THE PREFERRED EMBODIMENTS

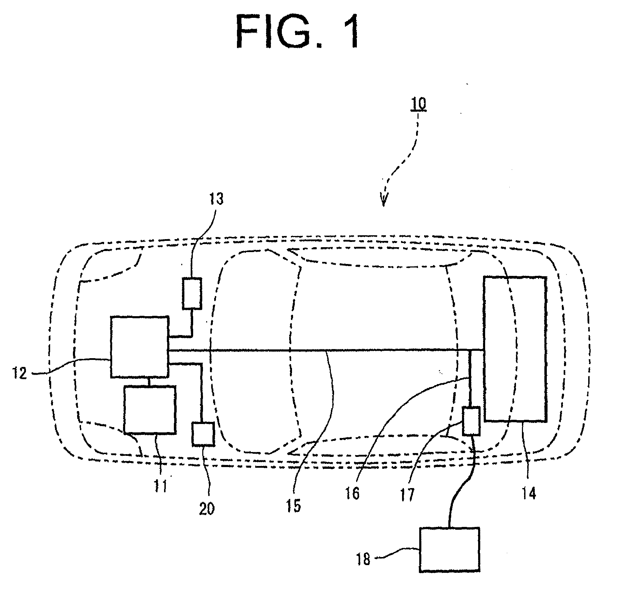

The following will describe an air conditioner according to a first preferred embodiment of the present invention with reference to Figs. 1 through 6B. Referring to Fig. 1, there is shown an air conditioner 20 mounted to an electric vehicle 10. An electric motor 11, an inverter 12, an electric control unit (ECU) 13 and an electric vehicle air conditioner (hereinafter referred to merely as "air conditioner") 20 are disposed in the front of the vehicle 10. The electric motor 11 serves as a power source for driving the vehicle 10. The inverter 12 converts electric power for supplying the electric power to the electric motor 11. The ECU 13 controls the operation of various devices of the vehicle 10, such as the inverter 12 and serves as a controller. The inverter 12 is connected electrically to the electric motor 11, the ECU 13 and the air conditioner 20 for supplying electric power. A battery 14 is mounted in the rear of the vehicle 10. A first power line 15 is arranged in the vehicle 10 for electrically connecting the battery 14 with the inverter 12. A second power line 16 is arranged in the vehicle 10 and connected to the first power line 15. The second power line 16 is also connected to a battery charger 17 which is connectable to an external power source 18. Thus, the air conditioner 20 is used for the vehicle 10 having the battery 14 charged by the external power generated by the external power source 18 during a stop state of the vehicle 10.

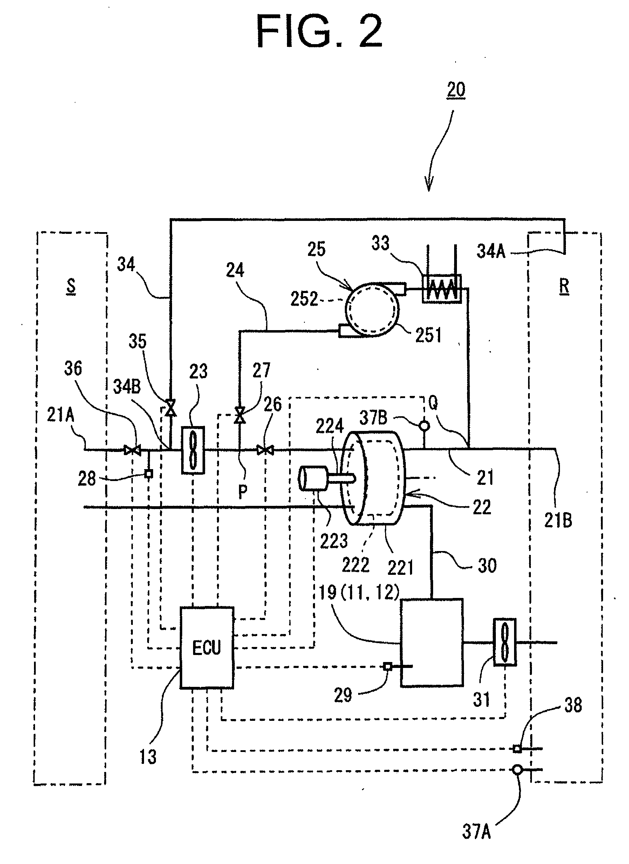

Referring to Fig. 2, the air conditioner 20 has an air passage 21 connecting an exterior S of the vehicle 10 as the exterior of the air conditioner 20 to an interior R of the vehicle 10 as the space to be air conditioned. The air passage 21 is a passage through which air for air conditioning of the interior R flows and has an inlet 21A communicable with the exterior S and an outlet 21 B communicable with the interior R. A first desiccant device 22 is disposed in the air passage 21 as a first moisture absorbing device. A first blower 23 is disposed in the air passage 21 between the first desiccant device 22 and the exterior S.

An air passage 24 is branched from the air passage 21 at a branch point P between the first blower 23 and the first desiccant device 22 and connected to the air passage 21 at a point Q between the first desiccant device 22 and the interior R. A second desiccant device 25 as a second moisture absorbing device is disposed in the branched air passage 24. A first valve 26 is disposed between the branch point P and the first desiccant device 22 in the air passage 21. A second valve 27 is disposed between the branch point P and the second desiccant device 25 in the branched air passage 24. A first temperature sensor 28 is disposed between the first blower 23 and the exterior S in the air passage 21. The first temperature sensor 28 serves as an air temperature sensor. The first temperature sensor 28 is used for measuring the temperature T1 of the air flowing adjacent to the first inlet 21A in the air passage 21 as the temperature of the external air which is to be dehumidified. In other words, the first temperature sensor 28 is used for measuring the temperature T1 of the air flowing to the first desiccant device 22 in the air passage 21 or to the second desiccant device 25 in the branched air passage 24. The heater 33 is disposed between the second desiccant device 25 and the point Q in the branched air passage 24. The heater 33 is operated to generate heat from electric power supplied by the external power source 18 as the external power for regenerating the second moisture absorber 252.

In the air conditioner 20 according to the first preferred embodiment of the present invention, the path of air flowing from the inlet 21A communicable with the exterior S through the branch point P, the first desiccant device 22 and the point Q to the outlet 21B communicable with the interior R as the space to be air conditioned forms the first air passage of the present invention. The path of air flowing from the inlet 21A through the branch point P, the second desiccant device 25 and the point Q to the outlet 21B forms the second air passage of the present invention. Therefore, part of the air passage that extends from the inlet 21A to the branch point P is common to the first and the second air passages, forming an exterior-side passage of the present invention. Similarly, part of the air passage that extends from the point Q to the outlet 21B is common to the first and second air passages, forming an air conditioner-side passage of the present invention. The inlet 21A communicable with the exterior S serves as a first inlet of the first air passage of the present invention and also a second inlet of the second air passage of the present invention. The outlet 21B communicable with the interior R serves as a first outlet of the first air passage of the present invention and also a second outlet of the second air passage of the present invention. Thus, part of the air passage is common to the air passages 21, 24, and the remaining parts of the air passages 21, 24 are arranged parallel to each other, or the inlet 21A and the inlet 21A or the outlet 21B and the outlet 21B is common to each other and the air passage 21 and the branched air passage 24 including the first desiccant device 22 and the second desiccant device 25 are arranged parallel to each other.

An internal air passage 34 is arranged in the air conditioner 20 for circulating air through the interior R. One end 34A of the internal air passage 34 is communicable with the interior R and air in the interior R is introduced into the internal air passage 34 through this end 34A. The other end 34B of the internal air passage 34 is connected to the air passage 21 at a point between the first temperature sensor 28 and the first blower 23. A third valve 35 is disposed in the internal air passage 34 and its operation controlled by the ECU 13. A fourth valve 36 is disposed between the inlet 21A and the first temperature sensor 28 in the air passage 21 and its operation is controlled by the ECU 13. In circulating air through the interior R while dehumidifying the air, the third valve 35 is opened, the fourth valve 36 is closed, and at least one of the first valve 26 and the second valve 27 is opened. When no air is circulated through the interior R, the third valve 35 is closed.

A humidity sensor 37A for measuring the humidity in the interior R and a third temperature sensor 38 for measuring the temperature in the interior R are provided in the air conditioner 20 and connected electrically to the ECU 13. The third temperature sensor 38 serves as a space air temperature sensor. The humidity sensor 37A is used in determining whether or not dehumidification of air in the interior R is needed. The third temperature sensor 38 is used for measuring the temperature of air in the interior R in determining which of the desiccant devices should be operated for dehumidifying the air in the interior R. The first blower 23, the first valve 26, the second valve 27, the third valve 35 and the fourth valve 36 regulate airflow in the air passage 21 and the branched air passage 24 and form an airflow controller of the present invention.

The air conditioner 20 according to the first preferred embodiment of the present invention further includes an electric power device 19. The electric power device 19 includes the inverter 12 and the electric motor 11, serving as the power source for the vehicle and a system heat source generating heat for regenerating a first moisture absorber 222 provided in the first desiccant device 22. The first moisture absorber 222 serves as a first desiccant material. The system heat source according to the first preferred embodiment of the present invention includes heat radiating devices radiating waste heat during the device operation on the vehicle 10 excepting internal combustion engines such as a heater and an engine which use electric power of battery. Specifically, the heat radiating devices include such vehicle-mounted components such as the inverter 12, the electric motor 11, the battery 14, a gear, and a brake. A second temperature sensor 29 is provided in the electric power device 19 for detecting the temperature T2 of exhaust heat generated by the system heat sources in the electric power device 19. The second temperature sensor 29 serves as a system heat source temperature sensor of the present invention.

A regeneration air passage 30 is formed in the air conditioner 20 as a heat supplier of the present invention for supplying exhaust heat generated by the electric power device 19. The regeneration air passage 30 communicates with the interior R and the exterior S and used for discharging air in the interior R. The regeneration air passage 30 is connected to the electric power device 19. The first desiccant device 22 is also disposed between the electric power device 19 and the exterior S in the regeneration air passage 30. A second blower 31 is disposed between the electric power device 19 and the interior R in the regeneration air passage 30.

The first desiccant device 22 is used for dehumidifying air introduced into the air passage 21 by the first blower 23. The first desiccant device 22 includes a cylindrical case 221 accommodating therein the first moisture absorber 222 that is ratatable. The first moisture absorber 222 has a property of absorbing moisture and releasing the absorbed moisture when the temperature of the first moisture absorber 222 reaches a predetermined temperature range. Mesoporous silica is used for the first moisture absorber 222. Mesoporous silica has a property of performing rapid dehumidification under a predetermined temperature and humidity, and releasing the absorbed moisture when the temperature of mesoporous silica increased to a temperature range from 50 through 60 degrees so that the moisture absorber is regenerated for reuse. Moisture absorbing property of the first desiccant device 22 is not higher as compared to the second desiccant device 25, but the first desiccant device 22 has a characteristic of being regenerated under a relatively low temperature in comparison to the second desiccant device 25. Thus, the first desiccant device 22 may be regenerated by exhaust heat generated in the electric power device 19 whose temperature is relatively low.

The above-described moisture absorbing property of each of the first and second desiccant devices 22, 25 is determined by the temperature of air at which the respective desiccant devices 22, 25 can dehumidify. With an increase of the moisture absorbing property of each of the first and second desiccant devices 22, 25, the first and second desiccant devices 22, 25 may perform sufficient dehumidification if the temperature of the air to be dehumidified is relatively high. If each of the first and second desiccant devices 22, 25 has a relatively high moisture absorbing property, or the temperature of the air to be dehumidified by the moisture absorber of the first and second desiccant devices 22, 25 is relatively high, the temperature for regenerating the moisture absorber tends to be high.

The first desiccant device 22 further includes an electric motor 223 having a rotary shaft 224. The first moisture absorber 222 of the first desiccant device 22 is mounted on the rotary shaft 224 for rotation therewith. The air passage 21 and the regeneration air passage 30 through which air for regenerating flows are connected to the first desiccant device 22 at two opposite positions of the rotary shaft 224. Specifically, in the case of Fig. 2, the air passage 21 and the regeneration air passage 30 are connected to the first desiccant device 22 at two opposite positions one above the other. Air is passed through the first moisture absorber 222 at the respective connections. Therefore, while the first desiccant device 22 is rotating, dehumidification of air flowing through the air passage 21 regeneration of the first moisture absorber 222 by the heat of the air flowing through the regeneration air passage 30 are simultaneously performed.

In the first preferred embodiment of the present invention, a humidity sensor 37B is disposed between the first desiccant device 22 and the point Q in the air passage 21 and connected electrically to the ECU 13.

The humidity sensor 37B measures the humidity of the air dehumidified by the first desiccant device 22. If the humidity of the dehumidified air exceeds a predetermined value because the regeneration of the first moisture absorber 222 by the exhaust heat of the system heat sources cannot meet the dehumidifying demand, the ECU 13 determines that the moisture absorbing capacity of the first desiccant device 22 has reached the maximum value, thereby activating the second desiccant device 25.

The second desiccant device 25 is used for dehumidifying air in the branched air passage 24. The second desiccant device 25 includes a case 251 accommodating therein a second moisture absorber 252. The second moisture absorber 252 serves as a second desiccant material. The second moisture absorber 252 has a property of absorbing moisture and releasing the absorbed moisture when the temperature of the second moisture absorber 252 reaches a predetermined temperature range by heating. Zeolite is used for the second moisture absorber 252. Zeolite has a higher moisture absorbing property than mesoporous silica and has a property of releasing the absorbed moisture at a temperature (around 100 degrees) higher than the temperature at which the regenerating mesoporous silica is regenerated.

According to the first preferred embodiment of the present invention, the ECU 13 controls the operation of various devices of the air conditioner 20. The ECU 13 controls the operations of the first and second blowers 23, 31, the first through fourth valves 26, 27, 35, 36, signals of the first through third temperature sensors 28, 29, 38 and the humidity sensors 37A, 37B and the rotation of the electric motor 223. The ECU 13 includes a memory (not shown) storing a program used for making various determinations based on signals from the first through third temperature sensors 28, 29, 38 and the humidity sensors 37A, 37B to select at least one of the first and second desiccant devices 22, 25 used for dehumidification.

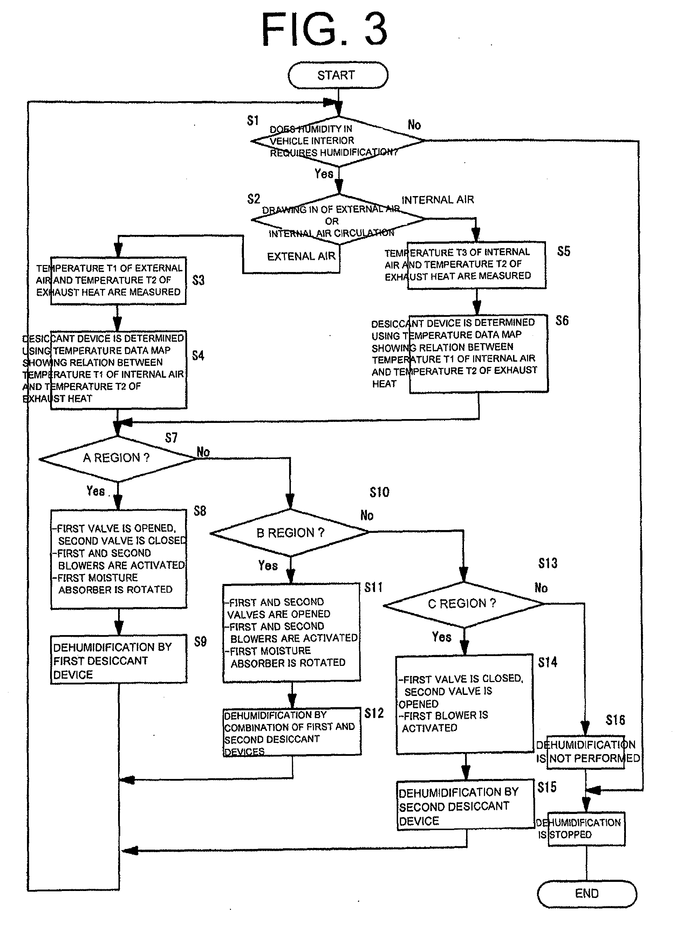

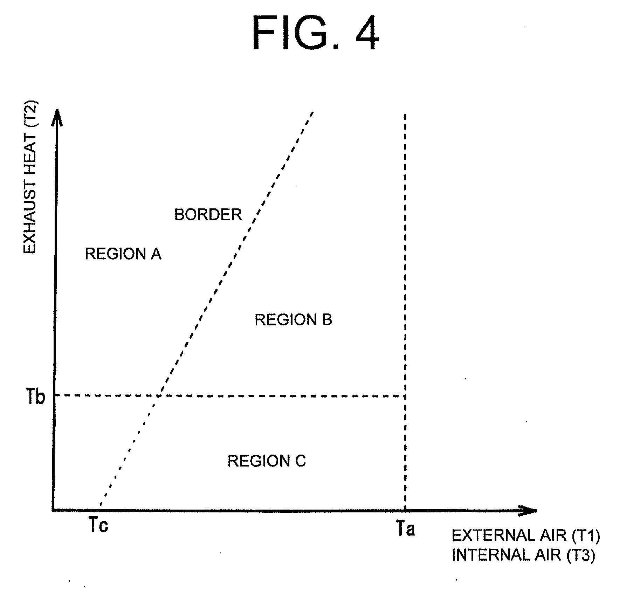

Flowchart of Fig. 3 shows steps of operation for controlling dehumidification in accordance with the condition of dehumidifying load detected by the first and third temperature sensors 28, 38 and also the presence or the magnitude of exhaust heat generated by the system heat sources such as the electric motor 11 and detected by the second temperature sensor 29. The dehumidifying load means a load of air conditioner for dehumidification, which is in general, high under a high temperature and high humidity condition, and low under a low temperature and low humidity condition. The following will describe the steps of operation for controlling with reference to the flowchart shown in Fig. 3. At step S1, the humidity in the interior R is measured by the humidity sensor 37A for determining whether or not dehumidification of the air in the interior R is required. If NO at the step S1, on the other hand, the operation of the dehumidification is stopped, and the process of the flowchart ends. If YES at the step S1, it is determined which of drawing in of external air and internal air circulation is required at step S2. If it is determined at the step S2 that intake of external air should be done, the temperature T1 is measured by the first temperature sensor 28 and the temperature T2 of the system heat sources is measured by the second temperature sensor 29 at step S3. At step S4, the ECU 13 determines which region of A through C indicated in the temperature data map shown in Fig. 4 includes the measured temperature T1 and the temperature T2.

If it is determined at the step S2 that the internal air circulation should be done, the temperature T3 is measured by the third temperature sensor 38, and the temperature T2 of the system heat source is measured by the second temperature sensor 29 at step S5. At step S6, the ECU 13 determines which region of Athrough C includes the temperature T3 and the temperature T2.

Following the steps S4, S6, it is determined at step S7 whether or not the temperature T2 is higher than the temperature Tb and temperature T1 (or the temperature T3) falls within the region A of the temperature data map of Fig. 4 based on the measured temperature T1 (or the temperature T3) and the temperature T2. When the temperature of exhaust heat is lower than the temperature Tb, the first and second desiccant devices 22, 25 may not be regenerated by the exhaust heat. According to the first preferred embodiment of the present invention, the temperature Tb is set at 40 degrees. Depending on the material of the first and second moisture absorbers 222, 252, the setting of the exhaust heat temperature Tb is changed. If it is determined at step S7 that the temperature T1 (or the temperature T3) falls in the region A, the first valve 26 is opened and the second valve 27 is closed, the first and second blowers 23, 31 are activated, and the electric motor 223 is driven at step S8. At step S9, therefore, the first desiccant device 22 humidifies external air flowing through the air passage 21 while being regenerated by exhaust heat generated by the system heat sources. The process goes back to the step S1.

If it is determined at the step S7 that the temperature T1 (or the temperature T3) does not fall within the region A, it is determined at step S10 whether or not the temperature T1 (or the temperature T3) falls within the region B. The region B is a region where the temperature T1 (or the temperature T3) is relatively high and the temperature T2 is higher than the temperature Tb. If it is determined at the step S10 that the temperature T1 (or the temperature T3) falls within the B region, the first and second valves 26, 27 are opened, the first and second blowers 23, 31 are activated, and the electric motor 223 is driven at step S11. At step 12, external air (or air flowing from the interior R through the internal air passage 34) flows through both of the first and second desiccant devices 22, 25; thereby being dehumidified. The process then goes back to the step S1.

If it is determined at the step S10 that the temperature T1 (or the temperature T3) does not fall within the region B, it is determined at step S13 whether or not the temperature T1 (or the temperature T3) falls within the region C. The region C is a region where the temperature T2 (or the temperature T3) is lower than the temperature Tb. If it is determined at the step S13 that the temperature T1 (or the temperature T3) falls within the region C, the first valve 26 is closed and the second valve 27 is opened, and only the first blower 23 is activated at step S14. Thus, at step 15, external air (or air flowing from the interior R through the internal air passage 34) flows through the second desiccant device 25, thereby being dehumidified. If it is determined at the step 13 that the temperature T1 (or the temperature T3) falls within the region C, it is determined at step S16 that dehumidification may not be performed, and then the process ends. Thus, according to any one of the regions A through C in the temperature data map shown in Fig. 4 within which the temperature falls, the desiccant device to be used for dehumidification is selected to dehumidify external air (or air flowing from the interior R through the internal air passage 34). If it is determined at the step S7 that the humidifying condition falls within the region A, the air conditioner 20 is operated in a normal operation mode. If the humidifying condition falls within the region B or region C in the step S10, or S13, the temperature T1 (or the temperature T3) and the temperature T2 are measured constantly for determining whether or not the humidifying condition falls within the region A. By so controlling the operation of the air conditioner 20, the time of operation of the second desiccant device 25 is minimized.

The following will describe in detail the temperature data map shown in Fig. 4. The temperature data map shows the relation between the temperature T1 (or the temperature T3) and the temperature T2, and the data of the temperature data map is stored in the memory of the ECU 13. In the region A of the temperature data map, the dehumidification may be performed by the first desiccant device 22, and the first desiccant device 22 may be regenerated. In other words, when the dehumidifying condition falls within the region A of the temperature data map, the dehumidifying load is so low that dehumidification may be performed only by the first desiccant device 22 and the exhaust heat for regenerating the first desiccant device 22 exists. If the dehumidifying condition falls within the region A of the temperature data map, no air is allowed to flow through the branched air passage 24. When the border between the regions A and B shown in the temperature data map of Fig. 4 represents threshold temperature Tc serving as a first threshold value and threshold temperature Tb serves as a second threshold value, the region A fulfills following two equations. The first threshold value represents most amount of a dehumidifying load to dehumidifying the air by the first desiccant device 22 and the second threshold value is the lowermost temperature required for regenerating the first moisture absorber 222.

$$T2 > Tb$$

$$T2 > A(T1 - Tc),$$

wherein A is a constant representing the gradient of the border.

In other words, allowing the air to flow through the branched air passage 24 is determined by a linear function of a differential between the temperature (T1) of the air and the first threshold value (Tc), and the second threshold value (Tb) is a constant.

When the dehumidifying condition falls within the region B of the temperature data map, the dehumidification may not be performed only by the first desiccant device 22, and the first desiccant device 22 may be regenerated. Thus, when the dehumidifying condition falls within the region B, the dehumidification is required to be performed by the second desiccant device 25 in addition to the first desiccant device 22. In other words, in the region B, the dehumidifying load is so high that dehumidification can be performed by the first and second desiccant devices 22, 25, and exhaust heat for regenerating the first desiccant device 22 exists.

When the dehumidifying condition falls within the region C of the temperature data map, the dehumidification may be performed by the second desiccant device 25, and the first desiccant device 22 may not be regenerated. In other words, in the region C, the dehumidifying load is of such an extent that the dehumidification is performed by the second desiccant device 25, and no exhaust heat for regenerating the first desiccant device 22 exists. The dehumidification may not be performed by the first desiccant device 22 and, therefore, the dehumidification of external air is required to be performed only by the second desiccant device 25. When the dehumidifying condition falls within the region B or C, air is allowed to flow through the branched air passage 24, and the regions B and C fulfill following three equations.

$$T1 < Ta$$

$$T2 < Tb$$

$$T2 < A(T1 - Tc)$$

If the temperature T1 (or the temperature T3) is higher than the temperature Ta in the temperature data map, the dehumidification may not be performed regardless of the existence of the exhaust heat. The temperature Ta serves as a third threshold value. For example, the temperature Ta in the temperature data map is the temperature for regeneration of the second moisture absorber 252 of the second desiccant device 25. The temperature Ta shown in Fig. 4 is the upper limit of temperature of the air to be dehumidified by the second desiccant device 25. If the temperature T1 of the air is higher than the temperature Ta which is higher than the first threshold value Tc and is a lowermost temperature required for regenerating the second moisture absorber 252, no air is allowed to flow through the air passage 21 and the the branched air passage 24. The temperature for regenerating the second moisture absorber 252 is increased with an increase of the temperature of air to be dehumidified by the second moisture absorber 252. Using the second moisture absorber 252 having a moisture absorbing capacity that is too high for the environment in which the vehicle is used is disadvantageous in supplying of heat. Thus, in selecting the second moisture absorber 252, the upper limit temperature of air to be dehumidified by the moisture absorbing of the second moisture absorber 252 may be determined with the vehicle usage environment taken into consideration so that the dehumidification may not be performed. In this case, it is determined that dehumidifying condition falls within the region C at the step S13, so that the process may skip the step S16 where it is determined that the dehumidification may not be performed. Region A where the temperature T2 is lower than the temperature Tb is the region where exhaust heat generated by the system heat sources for regenerating the first moisture absorber 222 of the first desiccant device 22 does not exist regardless of the temperature T1 (or the temperature T3), and the first desiccant device 22 may not be used. In the first preferred embodiment of the present invention, the temperature data map shown in Fig. 4 is used for explaining two relations between the temperature T1 and the temperature T2 and between the temperature T3 and the temperature T2, but two different temperature data maps may be made for the two relations. In addition, the border between the regions A and B has the gradient angle A. Alternatively, it may be determined that dehumidifying condition falls within the region A or B by determining whether or not the temperature T1 is higher than the first threshold value.

The following will describe in detail the regeneration of the second desiccant device 25. The regeneration of the second desiccant device 25 should preferably be performed during a stop state of the vehicle 10, such as during charging the battery 14 by the external power source 18. When regenerating the second desiccant device 25, the first valve 26 is closed, the second valve 27 is opened, and the first blower 23 is activated to rotate in reverse direction. The heater 33 is operated to heat the air introduced into the air passage 21 from the interior R and the heated air is flowed through the second desiccant device 25 for regenerating the second moisture absorber 252. Moisture released from the second moisture absorber 252 by regenerating the second moisture absorber 252 is discharged out into the exterior S through the first blower 23. Thus, the second moisture absorber 252 is regenerated during a time other than the time of the dehumidification of air.

The following will describe in detail the operation of the air conditioner 20. The air conditioner 20 according to the first preferred embodiment of the present invention is activated by button operation by an operator or by controlling of the ECU 13 based on predetermined program. Firstly, the humidity of the interior R is measured by the humidity sensor 37A to determine whether or not dehumidification is required. Then, if it is determined that the dehumidification is required, it is then determined which of drawing in of external air and internal air circulation is required.

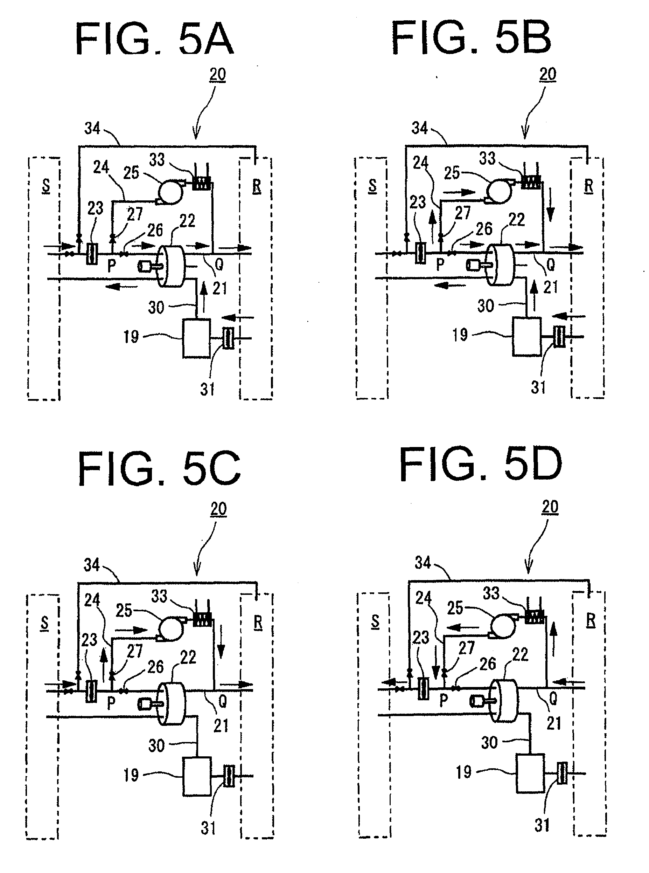

The following will describe the steps to take when the external air needs to be drawn in. If the ECU 13 determines based on the temperature T1 and the temperature T2 measured during driving operation of the vehicle 10 that the dehumidifying condition falls within the region A because of a condition of dehumidifying load and existence of the exhaust heat of the system heat sources, the first valve 26 is opened and the second valve 27 is closed. Then, the first and second blowers 23, 31 are activated, and the electric motor 223 is driven to rotate the first moisture absorber 222 of the first desiccant device 22. External air to be dehumidified is introduced into the air passage 21 and flowed through the first moisture absorber 222, as shown in Fig. 5A. The external air is dehumidified while being passed through the first moisture absorber 222. The dehumidified air is further passed through the air passage 21 and introduced into the interior R. Meanwhile, air in the interior R is introduced into the regeneration air passage 30, and heated by exhaust heat generated in the electric power device 19, such as the electric motor 11 and the inverter 12. The heated air is flowed through the first desiccant device 22 at the position opposite to the position connected to the air passage 21 of the rotary shaft 224, and moisture is removed from the first moisture absorber 222 and the first moisture absorber 222 is regenerated. Air containing removed moisture is discharged out to the exterior S. The part of the first moisture absorber 222 which has been regenerated is rotated to be used for dehumidification. Thus, dehumidification and regeneration of the first moisture absorber 222 are performed continuously.

If the ECU 13 determines that the dehumidifying condition falls within the region B from a condition of dehumidifying load and existence of the exhaust heat of the system heat sources, the first and second valves 26, 27 are both opened. The first and second blowers 23, 31 are activated and the electric motor 223 is driven to rotate the first moisture absorber 222. External air is introduced into and flowed through the air passage 21 by the rotation of the first moisture absorber 222, as shown in Fig. 5B. The external air introduced into the air passage 21 is divided at the branch point P into two flows, one flowing through the first desiccant device 22 and the other flowing through the branched air passage 24 and the second desiccant device 25. The external air flowing through the rotating first moisture absorber 222 and the second moisture absorber 252 is dehumidified by the first and second moisture absorbers 222, 252, respectively.

The air dehumidified by the first and second desiccant devices 22, 25 is merged together at the point Q and flowed through the air passage 21 and introduced into the interior R. Meanwhile, the air having a high temperature is flowed through the regeneration air passage 30 for heating the first moisture absorber 222. Thus, moisture is removed from the first moisture absorber 222 and the first moisture absorber 222 is regenerated. Since the moisture absorbing capacity of the second moisture absorber 252 is higher than that of the first moisture absorber 222, dehumidification under a high load can be accomplished more effectively by the first and second desiccant devices 22, 25 than by the first desiccant device 22 alone.

If the ECU 13 determines that the dehumidifying condition falls within the region C because of a condition of dehumidifying load and existence of the exhaust heat of the system heat sources, the first valve 26 is closed, and the second valve 27 is opened. The second blower 31 is at a stop, and the first blower 23 is activated. Thus, external air for dehumidification is introduced through the air passage 21 into the branched air passage 24 and then flowed through the second desiccant device 25, as shown in Fig. 5C. The air is passing through and dehumidified by the second moisture absorber 252 of the second desiccant device 25. Then, the dehumidified air is introduced through the point Q and the air passage 21 into the interior R. During this operation, the first desiccant device 22 is not operated.

The following will describe the regeneration of the second desiccant device 25 during a stop state of a vehicle. The second moisture absorber 252 of the second desiccant device 25 is regenerated during charging the battery of the vehicle, as shown in Fig. 5D. That is, regeneration of the second moisture absorber 252 is performed during the time other than when dehumidification is performed by the first and second desiccant devices 22, 25. While the second moisture absorber 252 is being regenerated, the first valve 26 is closed, the first blower 23 is operated to rotate in reverse direction, and the heater 33 is activated. Air in the interior R is introduced from the air passage 21 into the branched air passage 24 due to the reverse rotation of the first blower 23. The air introduced into the branched air passage 24 is heated by the heater 33 which is then in an energizing state. The heated air is flowed through the second desiccant device 25, so that the second moisture absorber 252 is heated and moisture is removed therefrom. The air containing the removed moisture is discharged out from the branched air passage 24 into the exterior S through the branch point P and the air passage 21.

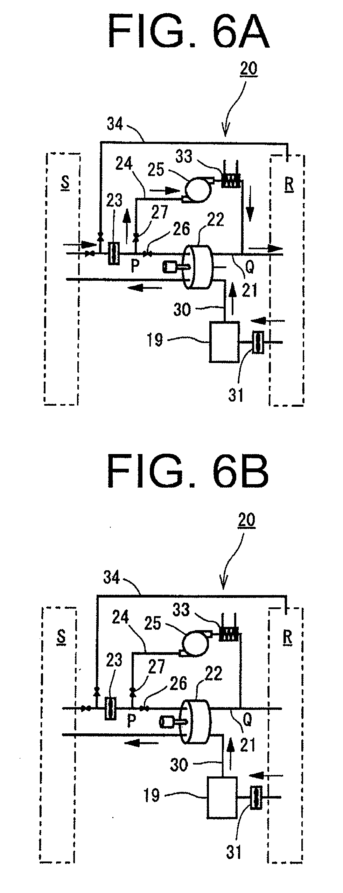

The following will describe the case when regeneration of the first moisture absorber 222 by the exhaust heat generated by the system heat sources is not enough to fulfill the demand of dehumidifying the external air by the first desiccant device 22. When the humidity measured by the humidity sensor 37B excesses a predetermined value during dehumidifying air by the first desiccant device 22, the ECU 13 determines that the first moisture absorber 222 has very little moisture absorbing capacity. Then, the ECU causes the first valve 26 to be closed and the second valve 27 to be opened. Therefore, the regeneration of the first moisture absorber 222 by exhaust heat generated by the system heat sources is continued with the flow of the air to the first desiccant device 22 shut off, as shown in Fig. 6A. Then, the air for dehumidification is introduced into and flowed through the branched air passage 24 and dehumidified by the second desiccant device 25. The dehumidified air is introduced into the interior R through the point Q. In this case, no air is dehumidified by the first moisture absorber 222, and only the regeneration is performed by exhaust heat of the system heat sources. Therefore, the moisture absorbing capacity of the first moisture absorber 222 is restored by the regeneration of the first moisture absorber 222. In a case no air is dehumidified by the first and second desiccant devices 22, 25 as shown in Fig. 6B, the regeneration of the first moisture absorber 222 may be performed by exhaust heat of the system heat sources.

The first preferred embodiment offers the following advantageous effects.

(1) Based on the temperature of air to be dehumidified and the system heat sources, air is dehumidified by at least one of the first and second desiccant devices 22, 25. Then, the dehumidified air is supplied to the interior R. During the dehumidification of air by the first desiccant device 22, the regeneration of the first moisture absorber 222 is performed simultaneously by the exhaust heat of the system heat sources. During the dehumidification of air by the second desiccant device 25, regeneration of the second moisture absorber 252 is not performed. When the dehumidifying load is low due to the temperature of air to be dehumidified and the exhaust heat of the system heat sources for regenerating the first desiccant device 22 exists, air conditioning may be performed while dehumidifying air only by the first desiccant device 22. Thus, the regeneration of the first desiccant device 22 is performed by effectively utilizing low-temperature exhaust heat generated by the electric motor 11 and the inverter 12. That is, dehumidification may be performed continuously even if the temperature of the exhaust heat of the system heat sources is low. If it is determined that the dehumidifying load is relatively high, but heat for regenerating the first desiccant device 22 exists, dehumidification may be performed by the first desiccant device 22 and the second desiccant device 25 which has higher dehumidifying capacity than the first desiccant device 22. If it is determined that the dehumidifying load is in the range in which dehumidification may be performed by the first desiccant device 22, but heat for regeneration of the first desiccant device 22 does not exits, air conditioning may be performed while dehumidifying air only by the second desiccant device 25. Thus, the air conditioner of the first preferred embodiment offers stable dehumidifying operation in a wide range of temperatures regardless of the environment surrounding the vehicle.

(2) The ECU 13 is informed of a condition of the dehumidifying load and existence of heat for regenerating the first desiccant device 22 from the temperature of air detected by the first temperature sensor 28 and the temperature of exhaust heat of the electric power device 19 detected by the second temperature sensor 29. Thus, the ECU 13 can control airflow in the air passages 21, 24 in accordance with a condition of the dehumidifying load and existence of heat for regeneration.

(3) The ECU 13 can control the airflow through the air passage 21 by controlling the operation of the first valve 26 and also the airflow through the branched air passage 24 by controlling the operation of the second valve 27.

(4) Since the vehicle 10 having the air conditioner 20 uses external electrical power for charging battery supplied from the external electrical power source, regeneration of the second moisture absorber 252 may be performed while the air conditioner 20 is at a stop and, therefore, no dehumidification is done for the first and second desiccant devices 22, 25. The battery 14 on the vehicle connected to the external power source 18 through the battery charger 17 may be used for supplying power to the heater 33 during a stop state of the vehicle without affecting the battery charging operation. Through the heater 33 is operated by and consumes electric power, the electric power in the battery 14 is not consumed since the electric power for the heater 33 may be supplied from the external power source 18.

(5) The first moisture absorber 222 containing at least one of mesoporous silica and silica gel may be regenerated at a lower temperature than the second moisture absorber 252 containing zeolite. The second moisture absorber 252 which has higher moisture absorbing capacity than the first moisture absorber 222 offers higher dehumidifying property.

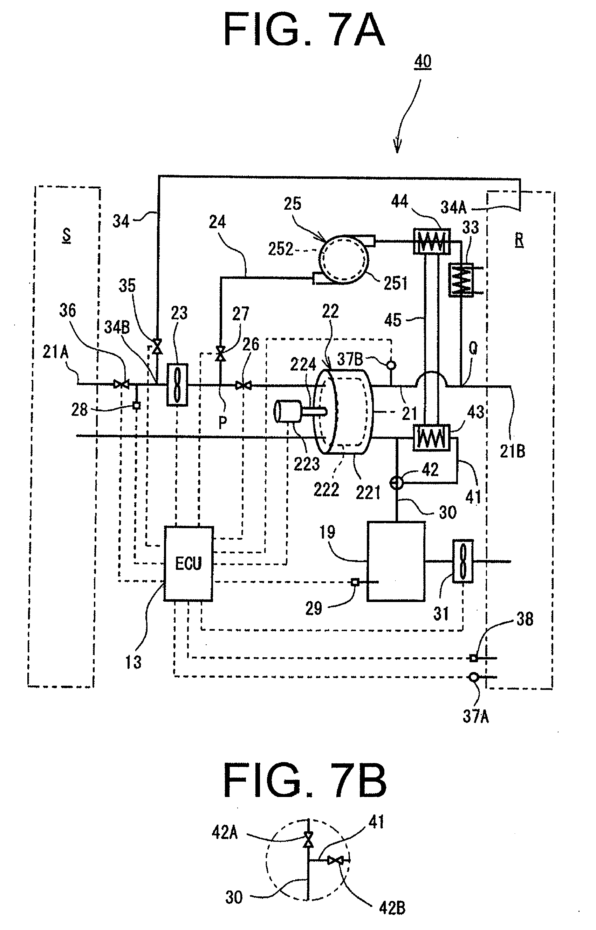

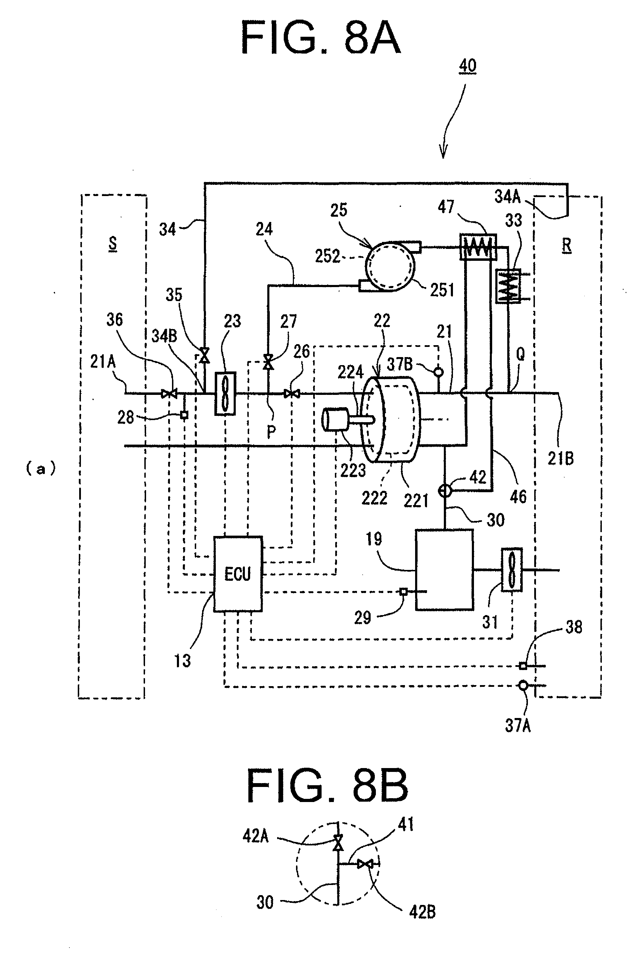

The following will describe an air conditioner 40 according to a second preferred embodiment of the present invention with reference to Figs. 7A, 7B, 8A and 8B. In the air conditioner 40 according to the second preferred embodiment of the present invention shown in Fig. 7A, common or similar elements or parts are designated by the same reference numerals as those of the first preferred embodiment and, therefore, the description thereof will be omitted. According to the first preferred embodiment of the present invention, the first desiccant device 22 is regenerated by exhaust heat generated by the system heat sources. According to the second preferred embodiment of the present invention, reaction heat generated in dehumidification of the second desiccant device 25 is used for regeneration of the first desiccant device 22. Thus, the system heat source according to the second preferred embodiment of the present invention includes the second desiccant device 25.

Referring to Fig. 7A, a regeneration air passage 41 is provided between the electric power device 19 and the first desiccant device 22. A three-way valve 42 is disposed at a junction between the regeneration air passage 30 and the regeneration air passage 41. The ECU 13 controls the operation of the three-way valve 42 to change the air passage, so that air from the electric power device 19 is flowed toward the regeneration air passage 30 or the regeneration air passage 41. A heat exchanger 43 is disposed in the regeneration air passage 41.

Another heat exchanger 44 is disposed between the second desiccant device 25 and the point Q in the branched air passage 24. A heat pipe 45 is provided for connection between the heat exchangers 43, 44. The heat exchangers 43, 44 and the heat pipe 45 form the reaction heat supplier of the present invention. The heat pipe 45 is thermally connected to the branched air passage 24 where the dehumidified air by the second desiccant device 25 flows. The heat pipe 45 includes a pipe body made of metal such as aluminum or copper having a high thermal conductivity and has a closed space (not shown) formed therein. The pipe body of the heat pipe 45 has in the space thereof wick (not shown) having capillary action and refrigerant gas (not shown) having characteristics of being evaporated and condensed in a narrow range of temperature.

According to the air conditioner 40 of the second preferred embodiment of the present invention, if the ECU 13 determines that the dehumidification condition falls within the region A because of a condition of dehumidifying load and existence of the exhaust heat generated by the system heat sources, dehumidification is performed only by the first desiccant device 22, as in the case of the first preferred embodiment. In this case, since the first moisture absorber 222 may be regenerated by exhaust heat of the system heat sources, the three-way valve 42 is operated so as to prevent air from the electric power device 19 from flowing into the regeneration air passage 41, but to allow air from the electric power device 19 to flow through the regeneration air passage 30 toward the first desiccant device 22. Thus, the first moisture absorber 222 is regenerated by the exhaust heat of the system heat sources.

If the ECU 13 determines that the dehumidifying condition falls within the region B because of a condition of the dehumidifying load and existence of the exhaust heat of the system heat sources, air is dehumidified by the combination of the first and second desiccant devices 22, 25. In this case, since the first moisture absorber 222 may be regenerated by the exhaust heat of the system heat sources, the three-way valve 42 is positioned such that air from the electric power device 19 is introduced into the regeneration air passage 41. Thus, the air from the electric power device 19 is flowed to the first desiccant device 22 through the regeneration air passage 30. Therefore, the first moisture absorber 222 is regenerated by the exhaust heat of the system heat sources.

If the ECU 13 determines that the dehumidifying condition falls within the region C because of a condition of the dehumidifying load and existence of the exhaust heat of the system heat sources, the three-way valve 42 is positioned so as to allow air to be introduced from the electric power device 19 into the regeneration air passage 41. During dehumidification of air by the second desiccant device 25, reaction heat is generated due to the moisture absorbing by the second moisture absorber 252, so that the dehumidified air in the branched air passage 24 is heated by the reaction heat. The heat of the dehumidified air is exchanged by the heat exchanger 44 to be transmitted to the heat pipe 45. The heat transmitted to heat pipe 45 is further transmitted rapidly to the heat exchanger 43, where air flowing through the regeneration air passage 41 is heated by the heat of the heat pipe 45 through heat exchanging. The air heated by the heat exchanging is flowed through the first desiccant device 22 and used for regenerating the first moisture absorber 222.

According to the air conditioner 40 of the second preferred embodiment of the present invention, the reaction heat generated during the dehumidification of the second desiccant device 25 may be utilized as a heat source for regeneration of the first moisture absorber 222. According to the first preferred embodiment of the present invention, the temperature of the exhaust heat of the system heat sources is low in the region C of the temperature data map of Fig. 4 and, therefore, air dehumidification by the first desiccant device 22 cannot be performed. According to the second preferred embodiment of the present invention, however, air dehumidification by the first desiccant device 22 and the regeneration of the first moisture absorber 222, as well as the air dehumidification by the second desiccant device 25, may be performed. In other words, according to the second preferred embodiment of the present invention, controlling for air dehumidification used for the region B may be used also in the region C where the temperature of the exhaust heat of the system heat sources is relatively low, with the result that the range of the region B is expanded. As shown in Fig. 7B, the three-way valve 42 may be substituted with a valve 42A disposed in the regeneration air passage 30 and a valve 42B disposed in the regeneration air passage 41.

According to the second preferred embodiment of the present invention, the regeneration of the first desiccant device 22 is regenerated by the reaction heat generated in the dehumidification of the second desiccant device 25 by using the heat pipe 45. Alternatively, as shown in Fig. 8A, heat exchanging is performed between the regeneration air passage 46 and the branched air passage 24 to transfer the reaction heat generated in the second desiccant device 25. The air conditioner 40 shown in Fig. 8A has a heat exchanger 47 for heat exchanging between the branched air passage 24 and the regeneration air passage 46. In this structure, the regeneration air passage 46 and the heat exchanger 47 form the reaction heat supplier of the present invention. The reaction heat generated in the dehumidification of the second desiccant device 25 is transferred by the dehumidified air flowing through the branched air passage 24. When the three-way valve 42 is positioned such that air is flowed through the regeneration air passage 46, heat exchanging is performed in the heat exchanger 47 between the dehumidified air flowing through the branched air passage 24 and the air flowing through the regeneration air passage 46. Thus, heat is transferred from the dehumidified air to the air in the regeneration air passage 46 by the heat exchanging and the heat is carried by the air in the regeneration air passage 46 and transferred to the first desiccant device 22. In this case, in the region C of the temperature data map, the dehumidification by the first desiccant device 22 and the regeneration of the first moisture absorber 222 may be performed in addition to the dehumidification by the second desiccant device 25, without using the heat pipe 45. As shown in Fig. 8B, the three-way valve 42 may be substituted with a valve 42A disposed in the regeneration air passage 30 and a valve 42B disposed in the regeneration air passage 41.

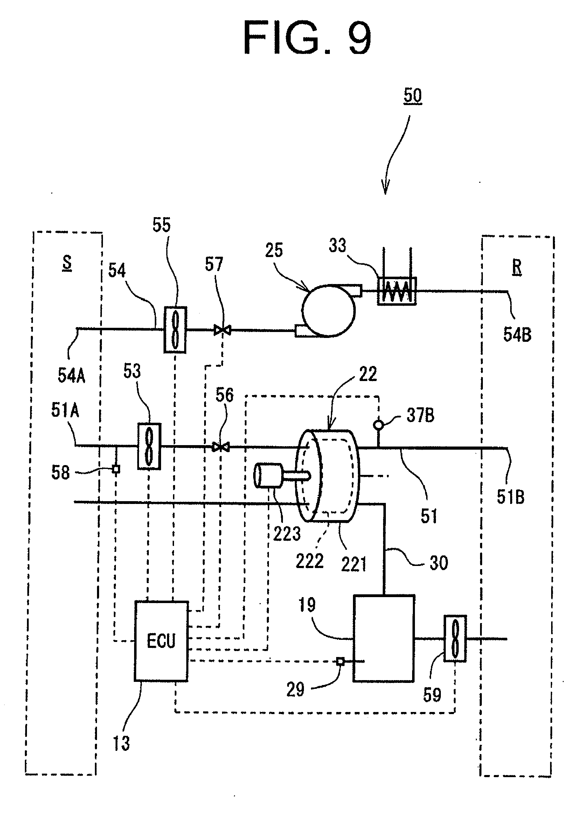

The following will describe an air conditioner 50 according to a third preferred embodiment of the present invention with reference to Fig. 9. In the air conditioner 50 according to the third preferred embodiment of the present invention shown in Fig. 9, common or similar elements or parts are designated by the same reference numerals as those which are used for the air conditioner 20 of the first preferred embodiment and, therefore, the description thereof will be omitted. According to the first and second preferred embodiments, the first desiccant device 22 is disposed in the air passage 21, the second desiccant device 25 is disposed in the branched air passage 24 branched from the air passage 21, the dehumidified air flowing in the branched air passage 24 is merged with the dehumidified air in the air passage 21 and supplied to the interior R. The air conditioner 50 according to the third preferred embodiment has two air passages 51, 54 provided separately without merging with each other, and the first and second desiccant devices 22, 25 are disposed in the air passages 51, 54, respectively.

As shown in Fig. 9, the first air passage 51 and the second air passage 54 connect the exterior S to the interior R, respectively. The first air passage 51 has an inlet 51A serving as the first inlet and an outlet 51 B serving as the first outlet. The inlet 51A is communicable with the exterior S, and the outlet 51 B is communicable with the interior R as a space for air conditioning. Similarly, the second air passage 54 has an inlet 54A serving as the second inlet and an outlet 54B serving as the second outlet. The inlet 54A is communicable with the exterior S of the vehicle, and the outlet 51 B is communicable with the interior R. The first temperature sensor 58, the first blower 53, the first valve 56 and the first desiccant device 22 are disposed in the first air passage 51 in this order from the exterior S toward the interior R. The third blower 55, the second valve 57, the second desiccant device 25 and the heater 33 are disposed in the second air passage 54 in this order from the exterior S toward the interior R. In the third preferred embodiment, a second blower 59 is disposed between the interior R and the electric power device 19 in the regeneration air passage 30. The first temperature sensor 58, the first blower 53, the first valve 56, the third blower 55, the second valve 57, the second blower 59 and the electric motor 223 are electrically connected to the ECU 13. In the third preferred embodiment, the first blower 53, the second blower 59, the second valve 57 and the third blower 55 form the airflow controller of the present invention. The first temperature sensor 58 serves as the air temperature sensor of the present invention.

In the third preferred embodiment, the first air passage 51 and the second air passage 54 are disposed separately. As in the case of the first embodiment, however, the dehumidification is performed by the first desiccant device 22 and the second desiccant device 25 based on the temperature data map shown in Fig. 4 and using the steps of the flowchart shown in Fig. 3.

As compared to the first preferred embodiment of the present invention, the number of the blowers used in the third preferred embodiment is increased by one, but the arrangement of the air passage may be simplified without having a branched point or a merging point.

In the third preferred embodiment, switching of air to be supplied to the first or second desiccant device 22, 25 is controlled independently by the first blower 53 or the third blower 55 and, therefore, the first and second valves 56, 57 may be omitted.

The present invention is not limited to the above-described first through third embodiments but may be variously modified within the scope of the invention. The first though third embodiments may be modified as exemplified below.

In the first through third preferred embodiments of the invention, the air conditioner is applied to an electric vehicle. However, the air conditioner is also applicable to a PHEV Furthermore, the air conditioner is applicable to a hybrid electric vehicle (HEV) excepting the PHEV. If the air conditioner is applied to PHEV or HEV, exhaust heat generated by an engine may be used as the heat for regenerating the second desiccant device during driving of the vehicle when the second desiccant device is not being dehumidified.

The present invention is advantageous particularly in an electric vehicle having no internal combustion engine and, therefore, having no exhaust heat available for regeneration of the moisture absorber.

In the first through third preferred embodiments of the present invention, the first desiccant device is of a rotor type in which dehumidification and regeneration may be simultaneously performed. The first desiccant device is not limited to the rotor type, but it may of any type as long as the dehumidification and regeneration may be simultaneously performed. For example, the first desiccant device may have in the case thereof a plurality of moisture absorbers, an air passage operable to switch the introduction of air to be dehumidified and a regeneration air passage operable to switch the introduction of regenerating air. In the first desiccant device having this structure, dehumidification and regeneration carried out simultaneously by performing air dehumidification at any moisture absorber in the desiccant device, and simultaneously performing regeneration of another moisture absorber which is not used for the air dehumidification.

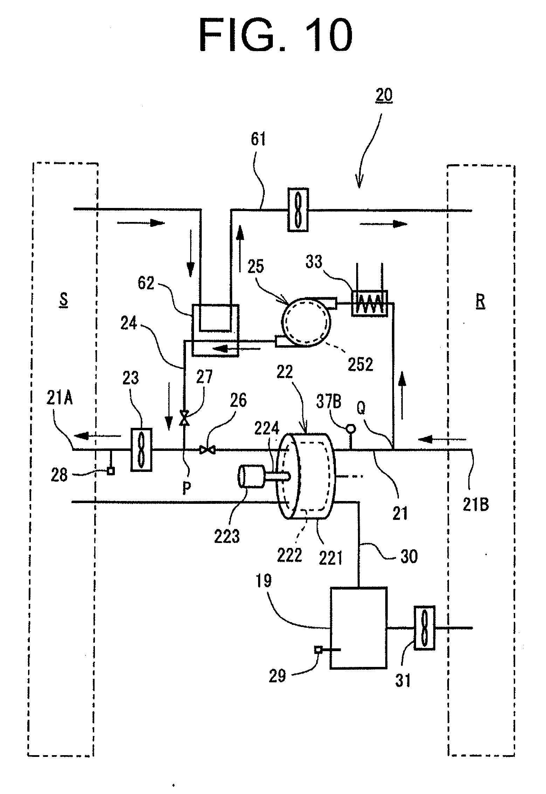

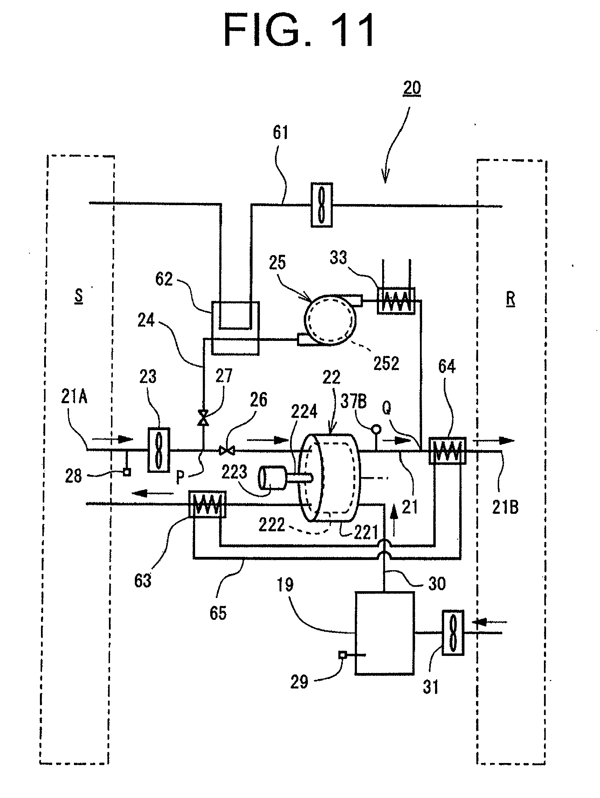

In the first through third preferred embodiments of the present invention, air for regeneration of the second desiccant device 25 is discharged to the vehicle exterior. Alternatively, heat of the air for regeneration of the second desiccant device 25 may be used for heating of the vehicle interior. In such a case, an additional air passage 61 is provided for connection between the exterior S to the interior R, and a heat exchanger 62 is disposed between the second desiccant device 25 in the branched air passage 24 and the exterior S for exchanging heat with the air in the air passage 61. In this structure, external air introduced into the air passage 61 is heated in the heat exchanger 62 by exchanging heat with the air flowing through the branched air passage 24 and then the heated air is introduced into the interior R. According to the air conditioner of this structure, heating of the interior R may be performed preciously before driving. Fig. 10 shows an example of the structure which is applied to the first preferred embodiment of the present invention, and it is also applicable to the second and third preferred embodiments of the present invention. Heat exchangers may be additionally provided in the structure shown in Fig. 10. Specifically, as shown in Fig. 11, a heat exchanger 63 is disposed between the first desiccant device 22 in the regeneration air passage 30 and the exterior S, and another heat exchanger 64 is disposed between the point Q in the air passage 21 and the interior R, an air circulation path 65 is formed for circulating air between the heat exchangers 63, 64. In the air conditioner of Fig. 10, air dehumidified by the first desiccant device 22 may be heated by exhaust heat generated during regeneration of the first desiccant device 22, and such heated dehumidified air may be used for heating of the interior R.

In the first through third preferred embodiments of the present invention, mesoporous silica is used for the first moisture absorber, and zeolite is used for the second moisture absorber. However, mesoporous silica and zeolite need not necessarily be used for the first moisture absorber and the second moisture absorber, respectively. For example, a moisture absorbing material made by adjusting the properties of mesoporous silica, zeolite or silica gel may be used for the first and second moisture absorbers. Thus, the moisture absorbing material may be formed such that the moisture absorbing property of the first moisture absorber is less than that of the second moisture absorber, but operable to switch the introduction of air to be dehumidified.

In the first through third preferred embodiments, the temperature data map shown in Fig. 4 includes the region C where the dehumidification cannot be performed. If the second desiccant device is made of a moisture absorbing material having sufficient dehumidifying capacity within the range of assumed temperatures under which vehicle is used, the region C may be omitted. In this case, the step S13 is no more necessary, so that determination at the step S10 may be omitted.

In the first through third preferred embodiments of the present invention, the temperatures of the system heat sources are determined by direct measurement, but the temperature determination is not limited direct measurement. If the system heat source is an electrical device, electric current that flows through the electrical device may be measured, so that the temperatures of the system heat sources may be estimated from the measured electrical current.

In the first preferred embodiment of the present invention, it is determined whether or not the dehumidification of air in the vehicle interior is required based on the humidity measurements provided by the humidity sensor. Alternatively, a switch for starting dehumidification may be provided in the air conditioner, so that the air conditioner is activated by operating the switch. In this case, the requirement for dehumidification of air in the vehicle interior is determined by a vehicle occupant. If the vehicle occupant determines that the dehumidification is required, the switch is turned on and the dehumidification of air in the vehicle is performed by the air conditioner.

In the first preferred embodiment of the present invention, the humidity sensor 37B is disposed between the first desiccant device 22 and the point Q in the air passage 21. Alternatively, a temperature sensor connected to the ECU may be disposed upstream of or downstream of the first desiccant device 22 in the air passage 21 as viewed in the air flowing direction in the air passage 21. Reaction heat is generated in the humidification. If the first desiccant device 22 has a sufficient humidifying capacity, temperature difference occurs in the air between before and after the dehumidifying. If the temperature difference exceeds a predetermined value, it may be determined that the regeneration of the first moisture absorber 222 is not sufficiently performed by exhaust heat of the system heat sources, and, in such a case, the second desiccant device 25 may be operated. The first temperature sensor may be used as a temperature sensor for measuring the temperature of air before being dehumidified by the first desiccant device 22. The temperature sensor may be disposed upstream or downstream of the first desiccant device 22 with respect to the air flowing direction in the air passage 21 in the second and third preferred embodiments of the present invention.

An air conditioner includes first and second air passages, first and desiccant devices, a system heat source, a heat supplier, a system heat source temperature sensor, an airflow controller and a controller. The first and second air passages are communicable with a space to be air conditioned. The first desiccant device disposing in the first air passage has a first desiccant material. The second desiccant device disposed in the second air passage has a second desiccant material whose temperature for regeneration is higher than the temperature for regeneration of the first desiccant material. The heat supplier supplies heat generated by the system heat source to the first desiccant device for regenerating the first desiccant material. The airflow controller regulates airflow in the first and second air passages. The controller controls the airflow controller based on the temperature of the system heat source detected by the system heat source temperature sensor.

## Claims

1.  An air conditioner (20, 40, 50) comprising:

    a first air passage (51) having a first inlet (21A, 51A) and a first outlet (21 B, 51 B) communicable with a space (R) to be air conditioned;
    a first desiccant device (22) having a first desiccant material (222), the first desiccant device (22) disposed in the first air passage (51);
    a second air passage (54) having a second inlet (21A, 54A) and a second outlet (21 B, 54B) communicable with the space (R);
    a second desiccant device (25) having a second desiccant material (252) whose temperature for regeneration is higher than the temperature for regeneration of the first desiccant material (222), the second desiccant device (25) disposed in the second air passage (24);
    a system heat source (11, 12, 14, 25);
    a heat supplier (30, 43, 44, 45, 46, 47) supplying heat generated by the system heat source (11, 12, 14, 25) to the first desiccant device (22) for regenerating the first desiccant material (222);
    a system heat source temperature sensor (29) for detecting the temperature of the system heat source (11, 12, 14);
    an airflow controller (23, 26, 27, 35, 36, 53, 55, 57, 59) regulating airflow in the first air passage

    (51) and the second air passage (54); and
    a controller (13) controlling the airflow controller (23, 26, 27, 35, 36, 53, 55, 57, 59) based on the temperature of the system heat source (11, 12, 14) detected by the system heat source temperature sensor (29).

2.  The air conditioner (20, 40, 50) according to claim 1, further comprising an air temperature sensor (28, 58) measuring the temperature of the air flowing to the first desiccant device in the first air passage (51) or the temperature of the air flowing to the second desiccant device (25) in the second air passage (54), **characterized in that** the controller (13) controls the airflow controller (23, 26, 27, 35, 36, 53, 55, 57, 59) based on the signals from the system heat source temperature sensor (29) and the air temperature sensor (28, 58).

3.  The air conditioner (20, 40, 50) according to claim 2, **characterized in that** the controller (13) controls the airflow controller (23, 26, 27, 35, 36, 53, 55, 57, 59) such that air is allowed to flow through the second air passage (54) if the temperature (T1) of the air is higher than a first threshold value (Tc) which represents most amount of a dehumidifying load to dehumidify the air by the first desiccant device (22) or the temperature (T2) of the system heat source (11, 12, 14, 25) is lower than a second threshold value (Tb) which is the lowermost temperature required for regenerating the first desiccant material (222), and no air is allowed to flow through the second air passage (54) if the temperature of the air is lower than the first threshold value (Tc) and the temperature (T2) of the system heat source (11, 12, 14, 25) is higher than the second threshold value (Tb).

4.  The air conditioner (20, 40, 50) according to claim 3, **characterized in that** allowing the air to flow through the second air passage (54) is determined by a linear function of a differential between the temperature (T1) of the air and the first threshold value (Tc), and the second threshold value (Tb) which is a constant.

5.  The air conditioner (20, 40, 50) according to claim 3 or 4, **characterized in that** the controller (13) controls the airflow controller (23, 26, 27, 35, 36, 53, 55, 57, 59) such that no air is allowed to flow through the first air passage (51) and the second air passage (54) if the temperature (T1) of the air is higher than a third threshold value (Ta) which is higher than the first threshold value (Tc) and is the lowermost temperature required for regenerating the second desiccant material (252).

6.  The air conditioner (20, 40, 50) according to any one of claims 1 through 5, further comprising a space air temperature sensor (38) measuring the temperature of the air in the space (R), **characterized in that** the space air temperature sensor (38) is used in determining which of the first desiccant device (22) and the second desiccant device (25) is operated.

**7.** The air conditioner (20, 40, 50) according to any one of claims 1 through 6, further comprising a humidity sensor (37A) measuring the humidity of the air in the space (R), **characterized in that** the humidity sensor (37A) is used in determining whether or not dehumidification of air in the space (R) is needed.

**8.** The air conditioner (20, 40) according to any one of claims 1 through 7, **characterized in that** the second air passage is branched from the first air passage, the first inlet (21A) and second inlet (21A) or the first outlet (21 B) and the second outlet (21 B) is common to each other, and the first air passage and the second air passage including the first desiccant device (22) and the second desiccant device (25) are arranged parallel to each other, **in that** the airflow controller (23, 26, 27, 35, 36, 53, 55, 57, 59) includes a first valve (26) disposed in the first air passage and a second valve (27) disposed in the second air passage, and **in that** the controller (13) controls airflow in the first air passage and the second air passage by controlling the operation of the first valve (26) and the second valve (27).

**9.** The air conditioner (40) according to any one of claims 1 through 8, **characterized in that** the system heat source includes a second desiccant device (25) which generates reaction heat during dehumidification, and the heat supplier includes a reaction heat supplier (43, 44, 45, 46, 47) supplying the reaction heat to the first desiccant device (22).

**10.** The air conditioner (40) according to claim 9, **characterized in that** the reaction heat supplier (43, 44, 45, 46, 47) includes a heat pipe (45) which is thermally connected to the second air passage where the dehumidified air by the second desiccant device (25) flows.

**11.** The air conditioner according to any one of claims 1 through 10, **characterized in that** the space is an interior (R) of a vehicle (10), and the system heat source (11, 12, 14, 25) is a device radiating waste heat during the device operation on the vehicle (10) except for an internal combustion engine.

**12.** The air conditioner (20, 40, 50) according to claim 11, **characterized in that** the air conditioner (20, 40, 50) is used for the vehicle (10) having a battery (14) charged by external power during a stop state of the vehicle (10) and the air conditioner (20, 40, 50) further includes a heater (33) operated to generate heat by the external power for regenerating the second desiccant material (252).

**13.** The air conditioner (20, 40, 50) according to any one of claims 1 through 12, **characterized in that** the first desiccant material (222) contains at least one of mesoporous silica and silica gel, and the second desiccant material (252) contains zeolite.

**14.** The air conditioner (20, 40, 50) according to any one of claims 1 through 13, **characterized in that** the first desiccant material (222) is simultaneously regeneratable during the dehumidification of air, and the second desiccant material (252) is regenerated during a time other than the time of the dehumidification of air.

**15.** A method of controlling an air conditioner (20, 40, 50), the air conditioner (20, 40, 50) includes a first desiccant device (22) having a first desiccant material (222), a second desiccant device (25) having a second desiccant material (252) whose temperature for regeneration is higher than the temperature for regeneration of the first desiccant material (222) and a system heat source (11, 12, 14, 30), **characterized by** the steps of:

performing dehumidification of air by at least one of the first desiccant device (22) and the second desiccant device (25) based on temperature (T1) of the air to be dehumidified and temperature (T2) of the system heat source (11, 12, 14, 25),
regenerating of the first desiccant material (222) simultaneously during the dehumidification of the air by the first desiccant device (22),
regenerating the second desiccant material (252) during a time other than when the dehumidification of the air is performed by the second desiccant device (25); and
supplying the dehumidified air to a space (R) to be air conditioned.

# FIG. 1

# FIG. 2

EP 2 305 498 A2

# FIG. 3

```
                              ( START )
                                  │
                                  ▼
                          S1 ┌──────────────┐
                             ╱ DOES HUMIDITY IN ╲        No
                            ╱  VEHICLE INTERIOR   ╲──────────────────────────┐
                            ╲  REQUIRES HUMIDIFICATION? ╱                    │
                             ╲──────────────╱                               │
                                  │ Yes                                     │
                                  ▼                                          │
                          S2 ┌──────────────┐  INTERNAL AIR                 │
                             ╱ DRAWING IN OF EXTERNAL AIR ╲                  │
                            ╱        OR                    ╲─────────┐       │
                            ╲  INTERNAL AIR CIRCULATION    ╱         │       │
                             ╲──────────────╱                       ▼       │
                    ┌──────────┘ EXTENAL AIR            ┌────────────────────┐  │
                    ▼                                   │ TEMPERATURE T3 OF INTERNAL │ S5
    ┌────────────────────────┐                          │ AIR AND TEMPERATURE T2 OF  │
    │ TEMPERATURE T1 OF EXTERNAL │                       │ EXHAUST HEAT ARE MEASURED  │
    │ AIR AND TEMPERATURE T2 OF  │ S3                    └────────────────────┘
    │ EXHAUST HEAT ARE MEASURED  │                                │
    └────────────────────────┘                                    ▼
                    │                                   ┌────────────────────┐  S6
                    ▼                                   │ DESICCANT DEVICE IS DETERMINED │
    ┌────────────────────────┐                          │ USING TEMPERATURE DATA MAP     │
    │ DESICCANT DEVICE IS DETERMINED │                   │ SHOWING RELATION BETWEEN       │
    │ USING TEMPERATURE DATA MAP     │ S4                │ TEMPERATURE T1 OF INTERNAL AIR │
    │ SHOWING RELATION BETWEEN       │                   │ AND TEMPERATURE T2 OF EXHAUST  │
    │ TEMPERATURE T1 OF INTERNAL AIR │                   │ HEAT                           │
    │ AND TEMPERATURE T2 OF          │                   └────────────────────┘
    │ EXHAUST HEAT                   │                            │
    └────────────────────────┘                                   │
                    │◄──────────────────────────────────────────┘
                    ▼
              S7 ┌──────────┐   No
                 ╱ A REGION ? ╲────────────────┐
                 ╲──────────╱                   │
                    │ Yes                        ▼
                    ▼                      S10 ┌──────────┐   No
    ┌────────────────────────┐                ╱ B REGION ? ╲──────────────────┐
    │ -FIRST VALVE IS OPENED,  │ S8            ╲──────────╱                    │
    │  SECOND VALVE IS CLOSED  │                  │ Yes                        ▼
    │ -FIRST AND SECOND        │                  ▼                    S13 ┌──────────┐  No
    │  BLOWERS ARE ACTIVATED   │   ┌────────────────────────┐ S11         ╱ C REGION ? ╲────┐
    │ -FIRST MOISTURE          │   │ -FIRST AND SECOND        │            ╲──────────╱     │
    │  ABSORBER IS ROTATED     │   │  VALVES ARE OPENED       │               │ Yes          │
    └────────────────────────┘   │ -FIRST AND SECOND        │               ▼              │
                    │              │  BLOWERS ARE ACTIVATED   │   ┌────────────────────┐ S14 │
                    ▼              │ -FIRST MOISTURE          │   │ -FIRST VALVE IS CLOSED, │  │
    ┌────────────────────────┐   │  ABSORBER IS ROTATED     │   │  SECOND VALVE IS         │  │
    │ DEHUMIDIFICATION BY      │ S9 └────────────────────────┘   │ OPENED                   │  │
    │ FIRST DESICCANT          │                │                │ -FIRST BLOWER IS         │  │
    │ DEVICE                   │                ▼                │ ACTIVATED                │  │
    └────────────────────────┘   ┌────────────────────────┐ S12 └────────────────────┘  ▼
                    │              │ DEHUMIDIFICATION BY      │                │     ┌──────────┐ S16
                    │              │ COMBINATION OF FIRST AND │                │     │ DEHUMIDIFICATION │
                    │              │ SECOND DESICCANT         │                │     │ IS NOT PERFORMED │
                    │              │ DEVICES                  │                ▼     └──────────┘
                    │              └────────────────────────┘   ┌────────────────────┐ S15    │
                    │                          │                 │ DEHUMIDIFICATION BY  │        ▼
                    │◄─────────────────────────┘                 │ SECOND DESICCANT     │  ┌──────────┐
                    │                                            │ DEVICE               │  │ DEHUMIDIFICATION │
                    │                                            └────────────────────┘  │ IS STOPPED │
                    │◄──────────────────────────────────────────────────┘               └──────────┘
                    │                                                                          │
                    │                                                                          ▼
                    └──────────────────────────────────────────►                        ( END )
```

17

# FIG. 4

# FIG. 5A

# FIG. 5B

# FIG. 5C

# FIG. 5D

# FIG. 6A

# FIG. 6B

# FIG. 7A

# FIG. 7B

# FIG. 8A

(a)

# FIG. 8B

# FIG. 9

# FIG. 10

# FIG. 11

# FIG. 12

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004177074 A